# FASCICULE DE BREVET EUROPEEN

(11) **EP 2 760 686 B1**
(45) Date de publication et mention de la délivrance du brevet: **06.04.2016**
(21) Numéro de dépôt: 12773081.0
(22) Date de dépôt: 25.09.2012
(51) Int. Cl.: B60J 5/04, E05B 77/04

(54) **RENFORT DE PORTE LATERALE**
SEITENTÜRVERSTÄRKER
SIDE DOOR STRENGTHENER

(30) Priorité: 27.09.2011 FR 1158645
(43) Date de publication de la demande: 06.08.2014
(73) Titulaire: Renault S.A.S., 92100 Boulogne-Billancourt (FR)
(72) Inventeur: CAM, Chrystele, F-78370 Plaisir (FR); DEGAUGUE, Remi, F-27160 Breteuil Sur Iton (FR); WEBER, Jean-Luc, F-78550 Houdan (FR)
(86) Numéro de dépôt international: PCT/FR2012/052146
(87) Numéro de publication internationale: WO 2013/045817

(56) Documents cités:
- EP-A1- 1 544 011
- EP-A2- 1 953 020
- JP-A- 11 293 969

## Description

Est ici concernée une structure de véhicule automobile. En d'autres termes, il s'agit d'une caisse ou partie de carrosserie de ce véhicule.

Dans le domaine, comme décrit notamment dans le document EP 1 953 020, on connaît déjà une structure de véhicule automobile selon le préambule de la revendication 1.

Cependant, en cas de choc latéral, cette structure de véhicule peut présenter un risque et mettre en péril la sécurité des occupants du véhicule.

Typiquement, lorsqu'un tel véhicule automobile est percuté sur un ou plusieurs côtés du véhicule, notamment au niveau des portes latérales, il arrive que lors du choc, la commande d'ouverture extérieure soit activée sous l'effet de la déformation générale de la porte.

Fréquemment, lors d'un tel choc, la tringle actionnant la serrure se déplace, rapprochant la commande d'ouverture extérieure de la serrure. Un tel rapprochement de la commande d'ouverture extérieure et de la serrure peut déclencher le désengagement du pêne par rapport à la gâche et provoquer l'ouverture intempestive de la porte.

L'habitacle d'un véhicule automobile est conçu pour préserver la sécurité des occupants, c'est pourquoi, en cas d'accident, et notamment lorsque le véhicule automobile est percuté latéralement, l'ouverture intempestive de la porte latérale met en jeu la sécurité de ses occupants, et notamment leur intégrité physique.

Il est ici proposé notamment de remédier à ces inconvénients, en proposant une structure selon la revendication 1.

D'une part, ce renfort de rétention peut permettre de limiter le déplacement de la commande d'ouverture extérieure par rapport à la serrure et notamment de limiter le déplacement de la tringle solidaire de la commande d'ouverture extérieure, déclenchant la serrure et assurant l'ouverture de la porte.

D'autre part, cette structure permet avantageusement de faciliter le montage en s'intégrant dans des portes latérales dites classiques. La commande d'ouverture extérieure et le renfort de ceinture n'ont pas besoin d'être reconçu afin d'y intégrer le renfort de rétention. En effet, la géométrie du renfort est avantageusement pensée de manière à mettre en regard les surfaces de liaison entre le renfort de rétention d'une part, le panneau de porte en regard de la commande d'ouverture extérieure et le renfort de ceinture d'autre part. La géométrie avantageuse, notamment l'orientation des surfaces, permet d'incorporer le renfort de rétention dans tout type de porte latérale classique, en adaptant ses dimensions.

Selon un mode particulier de l'invention, le renfort de rétention intègre une partie supérieure liée rigidement au renfort de ceinture et une partie inférieure liée rigidement à la commande d'ouverture extérieure. Le renfort, avantageusement intégré dans le panneau et monté au renfort de ceinture et à la commande d'ouverture extérieure, peut s'intégrer de manière très simple et économique dans une porte latérale de véhicule, et notamment dans le panneau de porte.

Selon un autre mode particulier de l'invention, la première et troisième surfaces (respectivement S1 et S3) s'étendent respectivement sur :
- la partie supérieure du renfort de rétention, et
- la partie inférieure du renfort de rétention.

Selon un autre mode particulier de l'invention, la première surface (S1) est sensiblement orthogonale à la troisième surface (S3). Ce mode particulier de l'invention permet notamment de solidifier l'ancrage du renfort de rétention en cas de choc.

Selon l'invention, le renfort de rétention possède au moins une portion concave, s'étendant entre la première surface (S1) et la troisième surface (S3) et orientée vers le côté extérieur de la structure. En cas de choc latéral, le solide qui percute le côté du véhicule va exercer une action mécanique au niveau du côté extérieur du panneau de porte et provoquer l'enfoncement de la porte latérale, notamment du panneau de porte, vers l'intérieur du véhicule. En cas de choc au niveau du renfort de ceinture, ou de la commande d'ouverture extérieure, le renfort de rétention va être sollicité selon une direction sensiblement transversale par rapport à la direction de déplacement du véhicule, vers l'intérieur du véhicule.

La concavité vers l'intérieur du véhicule offre ainsi au renfort une forme apte à encaisser un choc venant de l'extérieur du véhicule.

Selon l'invention, chaque portion concave orientée vers l'extérieur comprend une forme creuse orientée vers le côté extérieur du véhicule.

Selon un autre mode particulier de l'invention, chaque forme creuse possède un profil incurvé. Chaque forme creuse orientée vers le côté extérieur du véhicule confère au renfort des caractéristiques propres à encaisser un choc sans casser.

Selon un autre mode particulier de l'invention, la commande d'ouverture extérieure, le renfort de rétention et le panneau de porte sont montés solidaires grâce à des moyens de fixation.

Selon un autre mode particulier de l'invention, le renfort de rétention est lié par soudure au renfort de ceinture et monté solidaire de la commande d'ouverture extérieure par des moyens de fixation démontables. Les moyens de fixation démontables utilisés peuvent avantageusement être les fixations d'origine de la commande d'ouverture extérieure, c'est-à-dire du type goujons - écrous.

Il est établi que toutes les caractéristiques qui précèdent peuvent se combiner en tout ou partie.

Selon un second objet est également proposé un véhicule automobile équipé d'une structure de véhicule automobile incorporant tout ou partie des caractéristiques qui précèdent, voire celles qui vont être détaillées ci-après, en référence aux dessins annexées où :
- la figure 1 présente une vue latérale en perspective montrant une partie d'une structure de véhicule automobile selon l'invention, dans laquelle la porte latérale est représentée fermée,
- la figure 2 est une vue analogue à celle de la figure 1, la porte latérale étant représentée ouverte,
- la figure 3a présente une vue éclatée de la porte latérale, montrant le renfort de rétention selon un premier mode de réalisation de l'invention, logé dans le panneau de porte,
- la figure 3b est une vue de détail de la figure 3a, montrant le renfort de rétention et sa disposition par rapport au renfort de ceinture,
- la figure 4 est une vue de détail intérieure du panneau de porte, orientée vers le côté extérieur du véhicule, montrant le renfort de rétention monté sur le renfort de ceinture et la commande d'ouverture extérieure,
- la figure 5 est une vue de détail intérieure du panneau de porte, orientée vers le côté intérieur du véhicule, montrant les moyens de verrouillage de la porte latérale, le renfort de rétention et le renfort de ceinture,
- la figure 6 est une vue d'un renfort de rétention, seul, en perspective.

Afin de simplifier la description qui va suivre, les figures ont été orientées suivant le système d'axes X, Y, Z définissant l'orientation usuelle d'un véhicule automobile et dans lequel :
- l'axe X est l'axe longitudinal du véhicule, orienté d'arrière en avant ;
- l'axe Y est l'axe transversal, orienté de droite à gauche ; et
- l'axe Z est l'axe vertical, orienté du bas vers le haut.

Les termes de position et d'orientation qui sont utilisés par la suite s'entendent par rapport à ce système d'axes.

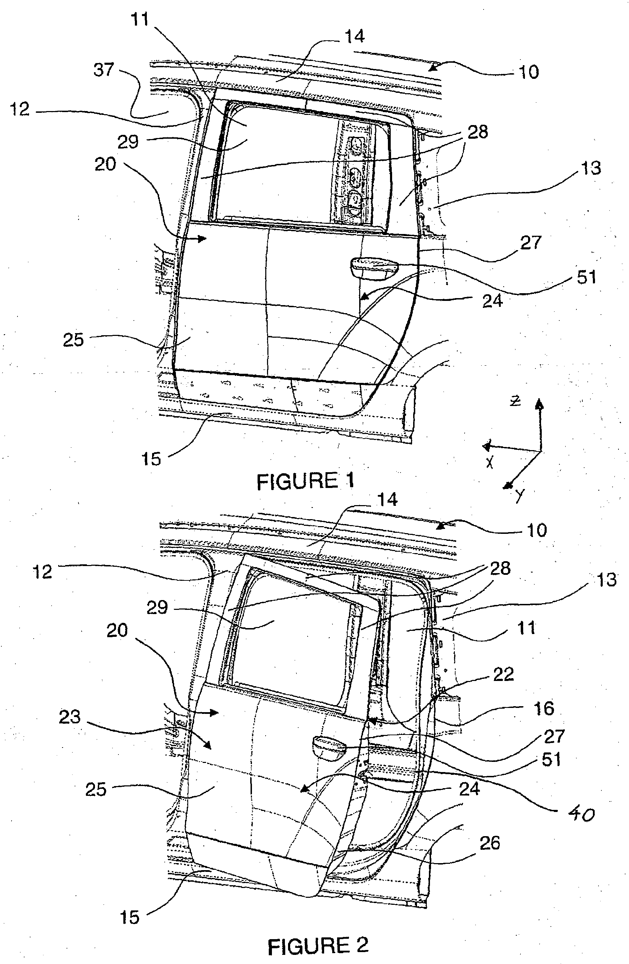

La figure 1 montre une partie de la structure 10 latérale gauche d'un véhicule automobile. La structure 10 est métallique.

Elle comprend une ouverture 11 d'accès latérale, par exemple délimitée par un premier pied 12, notamment un pied 12 de structure milieu, un second pied 13 de structure, notamment un pied 13 de structure arrière, une partie 15 inférieure et une partie 14 supérieure sensiblement longitudinales reliant les pieds 12, 13 milieu et arrière. L'ouverture d'accès latérale 11 définit un bord 16, présentant une géométrie à contour fermé. L'ouverture 11 d'accès latérale est dégagée et fermée par une porte 20 latérale.

Elle est articulée sur la structure 10 et s'étend entre les pieds 12 milieu et 13 arrière. La porte 20 est montée pivotante sur la structure 10 autour d'un axe (non représenté) sensiblement vertical généralement porté par le pied 12 milieu, ladite porte 20 latérale dégageant et fermant l'ouverture 11 d'accès latérale.

La porte 20 présente un côté 22 intérieur, disposé vers l'intérieur du véhicule, et un côté 23 opposé extérieur. La porte 20 comporte un panneau 24 de porte creux, formant la partie inférieure de la porte 20. Le panneau 24 comporte un panneau 25 extérieur et un panneau 26 intérieur définissant un corps creux entre les deux. Le panneau 24 s'étend suivant la direction Z, sensiblement dans un même plan, formant un cadre 28 d'une vitre 29.

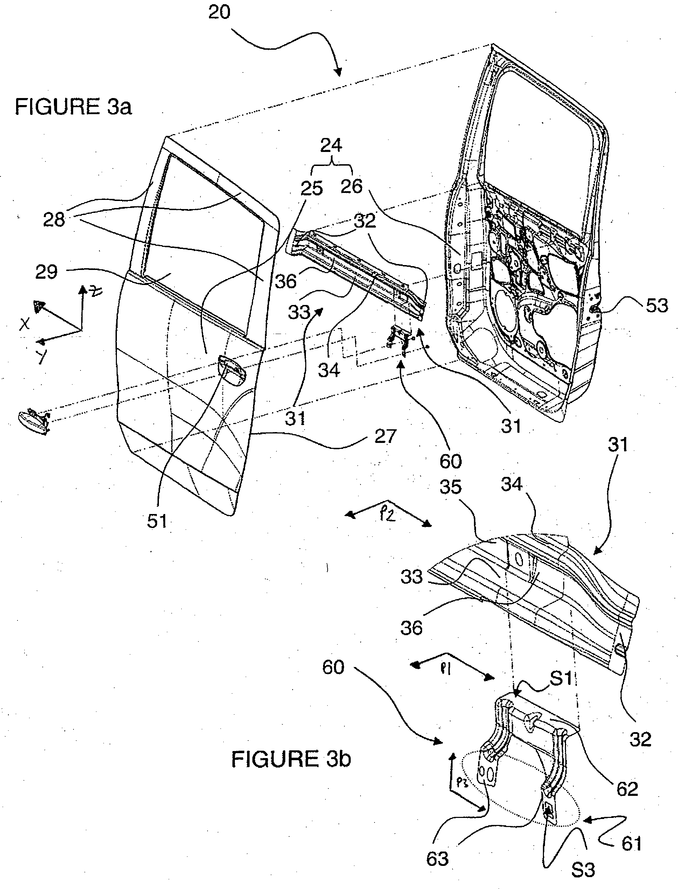

Comme le montre la figure 3a, la porte 20 latérale comporte un renfort 31 de ceinture, logé dans le panneau 24 de porte, et s'étendant le long de celui-ci. Il s'étend donc entre le panneau 25 extérieur et le panneau 26 intérieur.

Le renfort 31 de ceinture est fixé au panneau 24 de porte 20 sensiblement horizontalement. Le renfort 31 de ceinture est disposé entre le panneau 25 extérieur et le panneau 26 intérieur de la porte 20, dans une direction sensiblement horizontale, suivant l'axe X lorsque la porte 20 se trouve en position fermée. Les deux extrémités 32 opposées du renfort 31 de ceinture sont situées à proximité immédiate d'un bord 27 périphérique défini sur le contour du panneau 25 extérieur de la porte 20. Les deux extrémités 32 du renfort 31 de ceinture sont montées solidaires du panneau 26 intérieur, notamment au moyen de points de soudage, préférentiellement trois. Chaque partie longitudinale inférieure 33 et supérieure 34 sont fixées sur le panneau 24 de porte 20, par exemple par deux lignes de mastic, s'étendant sur les parties longitudinales inférieure 33 et supérieure 34.

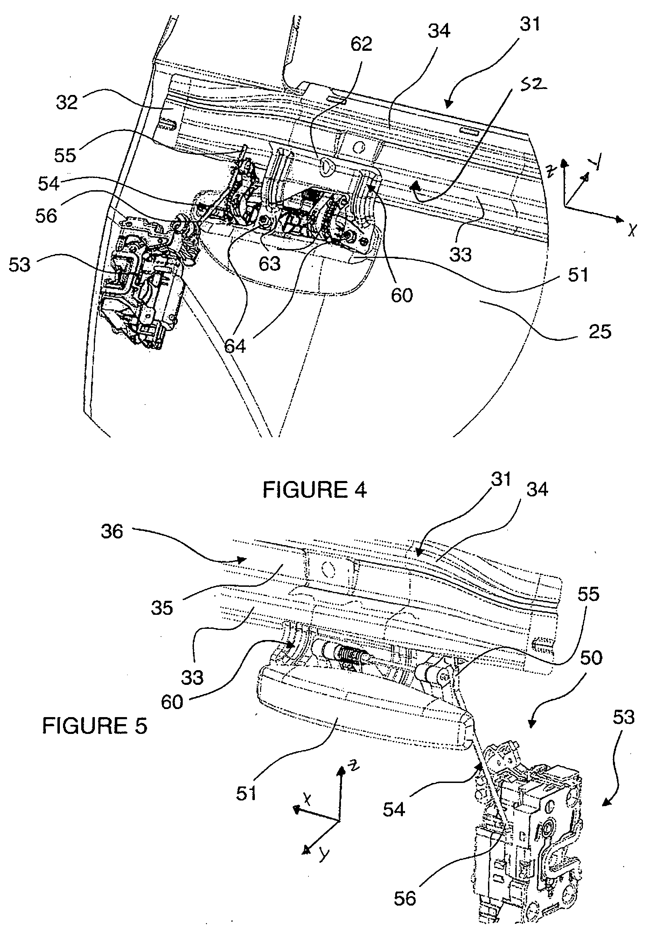

Comme on peut le voir sur la figure 5, le renfort 31 de ceinture est un profilé présentant sur une de ses grandes faces, au moins sur une partie de sa longueur, un enfoncement 36, délimité par une partie 33 inférieure, une partie 34 supérieure et une partie 35 intermédiaire.

Comme cela est représenté sur les figures 3a, 3b, 4 et 5, le profilé peut avoir, en coupe transversale, du côté ouvert du profilé, approximativement une forme de C, U ou V. Ce type de forme est particulièrement adapté pour permettre la fixation d'un renfort 60 de rétention.

Comme on peut le voir sur les figures 2 et 3a, la porte 20 latérale est munie du bord 27 adapté pour coopérer avec le bord 16 de l'ouverture 11 d'accès latérale, de manière à fermer l'ouverture 11 d'accès latérale, et fermer l'habitacle 37 du véhicule.

Le bord 27 de la porte 20 latérale est formé par un profilé s'étendant sensiblement suivant la direction Z entre les parties longitudinales inférieure 15 et supérieure 14 de la structure 10.

Des moyens d'étanchéité sont prévus entre le bord 27 de la porte 20 latérale et le bord 16 défini par le contour de l'ouverture 11 d'accès latéral.

Le bord 27 de porte 20 est équipé d'un moyen de verrouillage 50 relié à une commande d'ouverture extérieure de la porte 20.

La commande d'ouverture extérieure de la porte 20 est accessible depuis l'extérieur, sur le côté 23 extérieur du panneau 24 de porte 20. Elle est fixée sur une portion du panneau 25 extérieur de porte 20 de manière à coopérer avec les moyens de verrouillage 50 de la porte 20. Généralement, la commande d'ouverture extérieure est disposée au voisinage du pied 13 arrière de structure. La commande d'ouverture extérieure permet notamment de désenclencher les moyens de verrouillage 50.

Comme on peut le voir sur la figure 5, les moyens de verrouillage 50 incluent un premier élément (non représenté), un second élément 53 de serrure et une tringle 54 d'actionnement de serrure. Sur les figures 4 et 5 est représentée la tringle 54 d'actionnement de serrure du second élément 53 de serrure, notamment logée dans le panneau 24 de porte 20, laquelle, est montée entre la commande 51 d'ouverture extérieure et le second élément 53 de serrure que ladite tringle 54 est adaptée à actionner au moyen de la commande 51 d'ouverture extérieure.

Typiquement, le pied 13 reçoit en vis-à-vis de la serrure une gâche 40 par exemple vissée. La gâche 40 coopère avec le pêne.

Classiquement, la tringle 54 est une tige métallique de faible section cylindrique destinée à transmettre le mouvement de la commande 51 d'ouverture extérieure jusqu'aux éléments de serrure.

A titre d'exemple, une première extrémité 55 de la tringle 54 est montée solidaire à la commande 51 d'ouverture extérieure grâce à une agrafe permettant de pincer la tringle 54 à la commande 51 d'ouverture extérieure.

La seconde extrémité 56 de la tringle 54 est montée au second élément 53 de serrure de manière à ce qu'un déplacement, sensiblement selon l'axe Z et orienté vers le bas, de la tringle 54 par rapport au second élément 53 de serrure puisse déclencher le mécanisme d'ouverture.

Classiquement, lorsqu'on actionne la commande 51 d'ouverture extérieure, notamment par un mouvement de rotation, la tringle 54 translate et actionne un levier (non représenté). Le mouvement de rotation du levier sur la serrure implique le désengagement du second élément 53 de serrure par rapport au premier élément de serrure telle que la gâche 40, provoquant alors l'ouverture de la porte 20.

La gâche 40 est fixée sur le bord 16 de l'ouverture 11 d'accès latéral, au voisinage du pied 13 arrière, et le second élément 53 de serrure, tel un pêne, est fixé sur le bord 27 de la porte 20 latérale. Les deux éléments sont propres à maintenir la porte 20 latérale en position fermée, ou à permettre le désengagement des deux éléments de serrure lorsque l'utilisateur opère une action sur la commande 51 d'ouverture extérieure dans le but d'ouvrir la porte 20. Les premier et second éléments de serrure avec la gâche 40 sont agencés de manière à mettre en regard les deux éléments de serrure lorsque la porte 20 latérale est fermée, le pêne s'engageant de façon réversible autour de la gâche 40.

Les figures 1 à 6 montrent un organe de liaison formant renfort 60 de rétention, logé dans le panneau 24 de porte, entre le panneau 25 extérieur et le panneau 26 intérieur, définissant une liaison mécanique raide entre le renfort 31 de ceinture et la zone de la commande 51 d'ouverture extérieure. Il possède une forme générale d'arche et peut par exemple être en tôle ou en matériau composite.

Une fois monté, le renfort 60 immobilise, rigidifie, les liaisons mécaniques et contrôle les efforts mécaniques passant par ce dernier. Plus précisément, il contrôle les contraintes mécaniques s'exerçant à l'endroit des fixations entre le renfort 31 de ceinture et la commande 51 d'ouverture extérieure.

Le renfort 60 de rétention, intègre une partie 61 inférieure et une partie 62 supérieure. Classiquement, la partie 62 supérieure possède une forme sensiblement profilé, s'étendant sensiblement selon l'axe X, et la partie 61 inférieure comporte par exemple deux pattes 63 s'étendant sensiblement selon l'axe Z. Typiquement, la partie 62 supérieure du renfort 60 est liée rigidement au renfort 31 de ceinture et la partie 61 inférieure à la commande 51 d'ouverture extérieure.

Dans l'exemple de réalisation représenté sur les figures 3a, 3b, 4 et 5, la partie 62 supérieure du renfort 60 de rétention est fixée sur le renfort 31 de ceinture, préférentiellement sur la partie 33 inférieure du renfort 31 de ceinture, notamment sur la surface de la partie 33 inférieure orientée vers le bas de la porte 20 latérale. Le renfort 60 de rétention peut par exemple être solidarisé au renfort 31 de ceinture par trois ou quatre points de soudure.

Du côté de la partie 61 inférieure du renfort 60 de rétention, le renfort 60 est fixé en regard de la commande 51 d'ouverture extérieure préférentiellement par des moyens de fixation 64 démontables, notamment en utilisant les fixations d'origine de la commande 51 d'ouverture extérieure tel un système de goujons avec écrous.

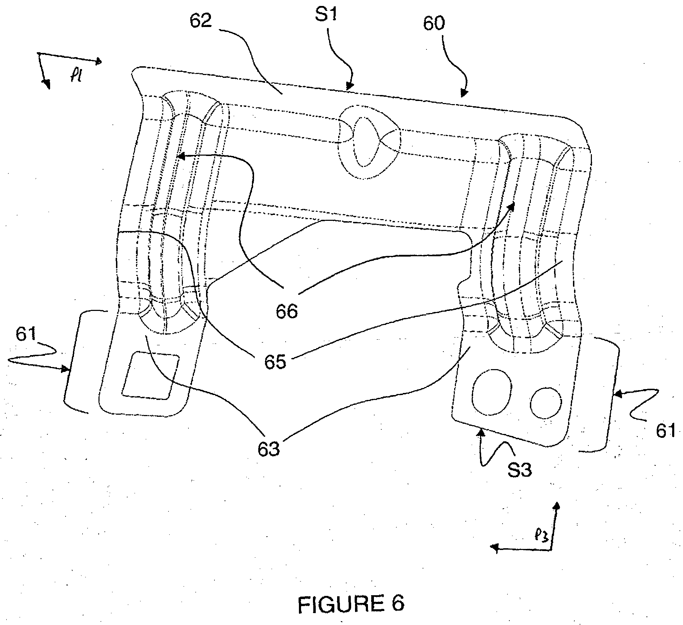

Suivant le mode de réalisation représenté sur les figures 4 et 6, le renfort 60 de rétention comprend :
- au moins une première surface S1 s'étendant selon un premier plan P1, sensiblement en regard d'une deuxième surface S2 s'étendant selon un deuxième plan P2, ladite deuxième surface S2 étant définie sur la partie 33 inférieure du renfort 31 de ceinture,
- au moins une portion de fixation orientée vers le côté 23 extérieur de la structure 10 comprenant une troisième surface S3 s'étendant selon un troisième plan P3, sensiblement en regard de la commande 51 d'ouverture extérieure, ladite portion de fixation étant liée à la surface interne du panneau de porte en regard de la commande 51 d'ouverture extérieure au niveau d'au moins une troisième surface S3.

Avantageusement, la première surface S1 s'étend sur la partie 62 supérieure du renfort 60 de rétention et la troisième surface S3 s'étend sur la partie 61 inférieure du renfort 60 de rétention. Il peut être également avantageux que le premier plan P1 soit sensiblement orthogonal au troisième plan P3.

Sur la figure 6, montrant un mode de réalisation du renfort 60 de rétention, le renfort 60 présente une portion 65 concave s'étendant entre la première surface S1. et la troisième surface S3. La portion 65 concave est préférentiellement orientée vers le côté 23 extérieur de la structure 10 de manière à limiter le déplacement de la commande 51 d'ouverture extérieure, et donc de la tringle de serrure.

Un tel renfort 60 présentant une portion 65 concave orientée vers l'extérieur peut comprendre une forme 66 creuse orientée vers le côté 23 extérieur du véhicule. Cette forme 66 creuse possède par exemple un profil incurvé. Un tel profil permet au renfort 60 de rétention d'avoir de bonnes propriétés de résistance aux chocs, tout en économisant de la matière.

Le renfort 60 de rétention peut présenter de nombreuses formes géométriques différentes, notamment toutes les formes géométriques permettant de solidariser la commande 51 d'ouverture extérieure au renfort 31 de ceinture de manière à limiter le déplacement de la commande 51 d'ouverture extérieure par rapport aux moyens de verrouillage 50, et notamment par rapport à la serrure.

On peut par exemple envisager de remplacer les portions concaves du renfort 60 par des nervures s'étendant entre les parties inférieure 61 et supérieure 62. Par exemple, les portions de nervures au niveau de la partie 61 inférieure du renfort 60 peuvent être en saillie vers le côté 23 extérieur de la structure 10 par rapport aux portions de nervures au niveau de la partie 62 supérieure du renfort 60.

Il est également envisageable que la forme 66 creuse définie dans la portion 65 concave, possède un profil en forme de U, C ou V - tout profil apte à conférer un caractère rigide aux portions concaves.

Ainsi, lorsque le véhicule subit un choc latéral, les efforts issus du choc poussent la porte 20 latérale vers l'intérieur du véhicule, entraînant l'encastrement transversal, sensiblement selon l'axe Y, du panneau 24 de porte 20 logeant le mécanisme d'ouverture de la porte 20, comprenant la commande d'ouverture extérieure et la partie supérieure de la tringle de serrure.

Le renfort 60 de rétention, formant organe de liaison entre le renfort 31 de ceinture et la commande d'ouverture extérieure, permet de limiter la variation de position de la commande d'ouverture extérieure dans le panneau 24. En effet, la commande 51 d'ouverture extérieure est liée mécaniquement, via le renfort 60 de rétention, au renfort 31 de ceinture qui est destiné à être rigide et à protéger les occupants du véhicule. A l'occasion d'un choc, la commande d'ouverture extérieure, liée rigidement au renfort 31 de ceinture, est alors moins soumis aux aléas de déplacement dus aux déformations de la partie latérale du véhicule, ce qui permet de limiter le déplacement de la commande d'ouverture selon les axes Z et Y, et notamment par rapport au second élément 53 de serrure. La limitation du déplacement de la commande d'ouverture extérieure par rapport au levier du second élément 53 de serrure limite le rapprochement de la commande d'ouverture extérieure et de la serrure, et donc du déclenchement du levier du second élément 53 de serrure par la tringle montée entre la commande d'ouverture extérieure et le levier du second élément 53 de serrure.

Autrement dit, limiter le déplacement de la commande 51 d'ouverture extérieure, permet de limiter le déplacement de la tringle induit par la commande 51 d'ouverture extérieure. Ce résultat est obtenu de façon particulièrement économique.

La structure 10 selon l'invention permet donc de protéger les occupants du véhicule en empêchant l'ouverture intempestive de la porte 20. Elle permet de protéger l'intégrité physique des occupants du véhicule.

L'invention a été décrite en se référant au côté arrière gauche du véhicule. Il est évident que l'invention peut également être réalisée du côté droit. Aussi, il est envisageable d'agencer une telle structure 10 pour les portes avant du véhicule, la structure 10 susmentionnée s'étendant alors entre le pied avant et le pied milieu.

## Revendications

1. Structure (10) de véhicule automobile comprenant un premier élément de serrure, une ouverture (11) d'accès latérale et une porte latérale (20) qui dégage et ferme ladite ouverture (11) d'accès latérale, ladite porte latérale (20) qui présente un côté intérieur disposé vers l'intérieur du véhicule et un côté opposé extérieur, comprenant :
• un panneau (24) de porte creux ;
• un renfort (31) de ceinture, logé dans le panneau (24) de porte et s'étendant le long de celui-ci ;
• un second élément (53) de serrure, s'engageant de façon réversible dans le premier élément de serrure ;
• une commande (51) d'ouverture extérieure de la porte (20), accessible depuis l'extérieur, sur ledit côté extérieur du panneau (24) de porte ;
• une tringle (54) d'actionnement du second élément (53) de serrure montée entre ce dernier et la commande (51) d'ouverture extérieure ;
• un organe de liaison formant renfort (60) de rétention, logé dans le panneau (24) de porte, définissant une liaison mécanique raide entre le renfort (31) de ceinture et la commande (51) d'ouverture extérieure ; ledit renfort (60) de rétention comprenant :
- au moins une première surface (S1) s'étendant selon un premier plan (P1), sensiblement en regard d'une deuxième surface (S2) s'étendant selon un deuxième plan (P2), ladite deuxième surface (S2) étant définie sur une partie inférieure du renfort (31) ;
- au moins une portion de fixation orientée vers le côté extérieur de la structure comprenant une troisième surface (S3) s'étendant selon un troisième plan (P3), sensiblement en regard de la commande d'ouverture extérieure, ladite portion de fixation étant liée à la surface interne du panneau de porte en regard de la commande (51) d'ouverture extérieure au niveau d'au moins ladite troisième surface,
le renfort (60) de rétention possédant au moins une portion (65), concave, s'étendant entre la première surface (S1) et la troisième surface (S3) et orientée vers le côté extérieur de la structure, **caractérisée en ce que** chaque portion (65) concave orientée vers l'extérieur comprend une forme (66) creuse orientée vers le côté extérieur du véhicule.

2. Structure de véhicule automobile selon la revendication 1, **caractérisée en ce que** le renfort (60) de rétention intègre une partie (62) supérieure liée rigidement au renfort (31) de ceinture et une partie (61) inférieure liée rigidement à la commande (51) d'ouverture extérieure.

3. Structure de véhicule automobile selon la revendication 2, **caractérisée en ce que :**
- la première surface (S1) s'étend sur la partie (62) supérieure du renfort (60) de rétention, et
- la troisième surface (S3) s'étend sur la partie (61) inférieure du renfort (60) de rétention.

4. Structure de véhicule automobile selon l'une quelconque des revendications 1 à 3, **caractérisée en ce que** la première surface (S1) est sensiblement orthogonale à la troisième surface (S3).

5. Structure de véhicule automobile selon la revendication 1, **caractérisée en ce que** chaque forme (66) creuse possède un profil incurvé.

6. Structure de véhicule automobile selon l'une quelconque des revendications précédentes, **caractérisée en ce que** la commande (51) d'ouverture extérieure, le renfort (60) de rétention et le panneau (24) de porte sont montés solidaires grâce à des moyens de fixation (64).

7. Structure de véhicule automobile selon l'une quelconque des revendications 1 à 6, **caractérisée en ce que** le renfort (60) de rétention est lié par soudure au renfort (31) de ceinture et monté solidaire de la commande (51) d'ouverture extérieure par des moyens de fixation (64) démontables.

8. Véhicule automobile équipé d'une structure (10) selon l'une quelconque des revendications 1 à 7.

## Patentansprüche

1. Struktur (10) eines Kraftfahrzeugs, umfassend ein erstes Schlosselement, eine seitliche Zugangsöffnung (11) und eine Seitentür (20), die die seitliche Zugangsöffnung (11) freigibt und verschließt, wobei die Seitentür (20), die eine Innenseite, die zum Inneren des Fahrzeugs angeordnet ist, und eine entgegengesetzte Außenseite aufweist, Folgendes aufweist:
• ein hohles Türpanel (24);
• eine Gürtelverstärkung (31), die in dem Türpanel (24) angeordnet ist und sich entlang von diesem erstreckt;
• ein zweites Schlosselement (53), das auf reversible Weise mit dem ersten Schlosselement in Eingriff steht;
• eine externe Öffnungssteuerung (51) der Tür (20), die von außen zugänglich ist, an der Außenseite des Türpanels (24);
• eine Stange (54) zum Betätigen des zweiten Schlosselements (53), die zwischen diesem Letzteren und der externen Öffnungssteuerung (51) montiert ist;
• ein Verbindungsorgan, das eine Halteverstärkung (60) bildet, das in dem Türpanel (24) angeordnet ist, das eine steife mechanische Verbindung zwischen der Gürtelverstärkung (31) und der externen Öffnungssteuerung (51) definiert; wobei die Halteverstärkung (60) Folgendes aufweist:
- mindestens eine erste Fläche (S1), die sich entlang einer ersten Ebene (P1) im Wesentlichen gegenüber einer zweiten Fläche (S2) erstreckt, die sich entlang einer zweiten Ebene (P2) erstreckt, wobei die zweite Fläche (S2) auf einem unteren Teil der Verstärkung (31) definiert ist;
- mindestens einen Befestigungsabschnitt, der zu der Außenseite der Struktur ausgerichtet ist, der eine dritte Fläche (S3) aufweist, die sich entlang einer dritten Ebene (P3) im Wesentlichen gegenüber der externen Öffnungssteuerung erstreckt, wobei der Befestigungsabschnitt mit der Innenfläche des Türpanels gegenüber der externen Öffnungssteuerung (51) an mindestens der dritten Fläche verbunden ist,
wobei die Halteverstärkung (60) mindestens einen konkaven Abschnitt (65) aufweist, der sich zwischen der ersten Fläche (S1) und der dritten Fläche (S3) erstreckt und zu der Außenseite der Struktur ausgerichtet ist, **dadurch gekennzeichnet, dass** jeder konkave Abschnitt (65), der zu der Außenseite ausgerichtet ist, eine hohle Form (66) aufweist, die zu der Außenseite des Fahrzeugs ausgerichtet ist.

2. Struktur eines Kraftfahrzeugs nach Anspruch 1, **dadurch gekennzeichnet, dass** die Halteverstärkung (60) einen oberen Teil (62), der mit der Gürtelverstärkung (31) starr verbunden ist, und einen unteren Teil (61) integriert, der mit der externen Öffnungssteuerung (51) starr verbunden ist.

3. Struktur eines Kraftfahrzeugs nach Anspruch 2, **dadurch gekennzeichnet, dass**
- sich die erste Fläche (S1) über den oberen Teil (62) der Halteverstärkung (60) erstreckt und
- sich die dritte Fläche (S3) über den unteren Teil (61) der Halteverstärkung (60) erstreckt.

4. Struktur eines Kraftfahrzeugs nach einem der Ansprüche 1 bis 3, **dadurch gekennzeichnet, dass** die erste Fläche (S1) im Wesentlichen orthogonal zu der dritten Fläche (S3) ist.

5. Struktur eines Kraftfahrzeugs nach Anspruch 1, **dadurch gekennzeichnet, dass** jede hohle Form (66) ein gebogenes Profil besitzt.

6. Struktur eines Kraftfahrzeugs nach einem der vorhergehenden Ansprüche, **dadurch gekennzeichnet, dass** die externe Öffnungssteuerung (51), die Halteverstärkung (60) und das Türpanel (24) durch Befestigungsmittel (64) fest verbunden montiert sind.

7. Struktur eines Kraftfahrzeugs nach einem der Ansprüche 1 bis 6, **dadurch gekennzeichnet, dass** die Halteverstärkung (60) durch Schweißen mit der Gürtelverstärkung (31) verbunden ist und mit der externen Öffnungssteuerung (51) durch abnehmbare Befestigungsmittel (64) fest verbunden montiert ist.

8. Kraftfahrzeug, das mit einer Struktur (10) nach einem der Ansprüche 1 bis 7 ausgestattet ist.

## Claims

1. Structure (10) of a motor vehicle, comprising a first lock element, a side access opening (11) and a side door (20) which opens and closes said side access opening (11), said side door (20) having an inside facing toward the inside of the vehicle and an opposite outside, comprising:
- a hollow door panel (24);
- a waist rail (31) housed in the door panel (24) and extending along this;
- a second lock element (53) engaging reversibly in the first lock element;
- an outer opening control (51) of the door (20), which is accessible from the outside, on said outside of the door panel (24);
- a linkage (54) for actuating the second lock element (53) mounted between said element and the outer opening control (51);
- a connecting member forming a retaining reinforcer (60), housed in the door panel (24) and defining a stiff mechanical connection between the waist rail (31) and the outer opening control (51); said retaining reinforcer (60) comprising:
- at least one first surface (S1) extending along a first plane (P1) substantially opposite a second surface (S2) extending along a second plane (P2), said second surface (S2) being defined by a lower part of the reinforcer (31);
- at least one fixing portion, which is oriented toward the outside of the structure and comprises a third surface (S3) extending along a third plane (P3) substantially opposite the outer opening control, said fixing portion being connected to the inner surface of the door panel opposite the outer opening control (51) at the level of at least said third surface,
the retaining reinforcer (60) having at least one concave portion (65) extending between the first surface (S1) and the third surface (S3) and oriented toward the outside of the structure, **characterized in that** each concave portion (65) oriented toward the outside comprises a hollow form (66) oriented toward the outside of the vehicle.

2. Motor vehicle structure according to Claim 1, **characterized in that** the retaining reinforcer (60) integrates an upper part (62) rigidly connected to the waist rail (31), and a lower part (61) rigidly connected to the outer opening control (51).

3. Motor vehicle structure according to Claim 2, **characterized in that**
- the first surface (S1) extends over the upper part (62) of the retaining reinforcer (60), and
- the third surface (S3) extends over the lower part (61) of the retaining reinforcer (60).

4. Motor vehicle structure according to any of Claims 1 to 3, **characterized in that** the first surface (S1) is substantially orthogonal to the third surface (S3).

5. Motor vehicle structure according to Claim 6, **characterized in that** each hollow form (66) has a curved profile.

6. Motor vehicle structure according to any of the preceding claims, **characterized in that** the outer opening control (51), the retaining reinforcer (60) and the door panel (24) are firmly assembled by fixing means (64).

7. Motor vehicle structure according to any of Claims 1 to 6, **characterized in that** the retaining reinforcer (60) is connected by welding to the waist rail (31) and firmly attached to the outer opening control (51) by removable fixing means (64).

8. Motor vehicle equipped with a structure (10) as claimed in any of Claims 1 to 7.
